# EUROPÄISCHE PATENTSCHRIFT

(11) **EP 0 971 835 B1**
(45) Veröffentlichungstag und Bekanntmachung des Hinweises auf die Patenterteilung: **07.01.2004**
(21) Anmeldenummer: 98964439.8
(22) Anmeldetag: 25.11.1998
(51) Int. Cl.: B61D 17/04, B61D 17/08, B62D 31/02

(54) **FAHRZEUGZELLE**
VEHICLE CELL
CELLULE DE VEHICULE

(30) Priorität: 22.12.1997 DE 19757204
(43) Veröffentlichungstag der Anmeldung: 19.01.2000
(73) Patentinhaber: Bombardier Transportation GmbH, 13627 Berlin (DE)
(72) Erfinder: HOROSCHENKOFF, Alexander, D-81373 München (DE); SCHEID, Peter, D-82380 Peissenberg (DE); SCHÄHL, Wolfgang, D-16761 Henningsdorf (DE); FRETWURST, Thomas, D-12435 Berlin (DE)
(74) Vertreter: COHAUSZ & FLORACK
(86) Internationale Anmeldenummer: PCT/EP1998/007596
(87) Internationale Veröffentlichungsnummer: WO 1999/032341

(56) Entgegenhaltungen:
- EP-A- 0 780 279
- DE-A- 3 838 686
- FR-A- 2 704 507

## Beschreibung

Die Erfindung betrifft eine Fahrzeugzelle gemäß dem Oberbegriff des ersten Anspruchs.

Bei einer bekannten Fahrzeugzelle dieser Art (DD 83378), die als Wagenkasten für Schienenfahrzeuge ausgebildet ist, sind Dach- und Seitenwände jeweils aus mehreren, in Fahrzeuglängsrichtung aneinandergefügten Wandelementen gebildet. In einem Segment der zusammengesetzten Seitenwand befindet sich eine Türöffnung. Die Wände selbst sind in Sandwich-Struktur mit zwei Decklagen ausgebildet, zwischen welche ein isolierendes Kernmaterial und im Randbereich als Randabschluß U-förmige Abschlußleisten zur Verbindung mit benachbarten Bauteilen vorgesehen sind.

Die DE 38 38 686 A1 betrifft eine Fahrzeugzelle, bei der die Wandsegmente eine Sandwich-Struktur mit einem zwischen zwei Decklagen eingeschlossenen Gittergerüst aufweisen. Auch hier sind die Türöffnungen jeweils in einem der Seitenwandsegmente angeordnet.

Die FR 2 704 507 A1 betrifft demgegenüber eine gattungsgemäße Fahrzeugzelle, bei der die Wandsegmente aus einer Sandwich-Struktur aufgebaut sind, die einen zwischen zwei Decklagen eingeschlossenen geschäumten Kern aufweist. Eine Türöffnung ist hierbei von zwei aneinandergrenzenden Seitenwandsegmenten gebildet. Zwar ist hier auf Grund der kleinen Kontaktbereiche zwischen den Seitenwandsegmenten insofern weniger Aufwand für die Verbindung zwischen den Seitenwandsegmenten zu betreiben, als beispielsweise nur eine geringe Anzahl von Verbindungselementen oder dergleichen erforderlich ist. Allerdings sind die Wandsegmente selbst vergleichsweise aufwändig, um mit dieser Sandwich-Struktur eine entsprechende Festigkeit und Steifigkeit zu erzielen.

Der Erfindung liegt die Aufgabe zugrunde, bei einer Fahrzeugzelle gemäß dem Oberbegriff des ersten Anspruchs Maßnahmen zu treffen, die mit einfachen Mitteln ein vorteilhaftes Baukonzept hinsichtlich Gewicht, Kosten, Wartung, ermöglichen.

Die Lösung dieser Aufgabe erfolgt gemäß der Erfindung durch die Merkmale des ersten Anspruchs.

Bei einer Ausgestaltung einer Fahrzeugzelle gemäß der Erfindung wird die Trennfuge zwischen benachbarten Wandsegmenten in den Türbereich verlagert, in dem ohnehin eine zumindest weitgehende vertikale Trennung zwischen benachbarten Seitenwandabschnitten eintritt. Die hierfür im Bereich benachbarter Wandsegmente vorgesehenen Türteilausschnitte sind dabei so bemessen, daß der gemeinsam gebildete Türausschnitt einer vollen Türbreite entspricht. Die Seitenwandsegmente können somit oberhalb des Türausschnitts noch unmittelbar miteinander verbunden werden. Zwischen den jeweils mit einem Türteilausschnitt versehenen vertikalen Seitenrändern der Seitenwandsegmente können Fensterausschnitte an statisch günstiger Stelle angeordnet werden. Am Ende der Fahrzeugzelle angeordnete Seitenwandsegmente sind dabei jedoch nur an ihrer dem jeweils benachbarten Seitenwandabschnitt zugewandten Seite mit einem Türteilausschnitt versehen. Die Länge endständiger Seitenwandsegmente entspricht vorzugsweise der halben, in Fahrzeuglängsrichtung gemessenen Länge eines zwei Türteilausschnitte aufweisenden Seitenwandsegments. Dadurch ergibt sich die Möglichkeit, Seitenwandsegmente und die in Längsrichtung äußeren Dachwände mit dem Ende der Fahrzeugzelle abschließen zu lassen, so daß ein Dachsegment mindestens zwei halbe Seitenwandsegmente mit den dort befindlichen vertikalen Trennfugen übergreift. Durch feste Verbindung der Seitenwandsegmente mit den überlappenden Dachwandsegmenten ergibt sich dann auch im Bereich der Trennfugen zwischen den einzelnen Seitenwandsegmenten eine ausreichende Steifigkeit der gesamten Fahrzeugzelle. Die Stoßstelle zwischen zwei Dachwandsegmenten liegt jeweils im Bereich der Längsmitte oberhalb eines mit zwei Teiltürausschnitten versehenen Seitenwandsegments. Es ergibt sich so eine optimale Verbindung im Bereich dieser Stoßstellen zwischen einem Seitenwandsegment und zwei aneinander in Längsrichtung anschließenden Dachwandsegmenten.

Die Wandsegmente sind insbesondere als Sandwich-Struktur mit zwei Decklagen und einem fest dazwischen angeordneten Gittergerüst aus miteinander verbundenen Gerüststäben und dazwischen eingelegten Sandwich-Kernen aufgebaut. Dabei greifen Gerüststäbe auch in den schmalen, die Türöffnung übergreifenden Arm des Seitenwandsegments ein und schließen deren Randzonen wie im übrigen Bereich ab, so daß diese nach außen weisenden Teile der Gerüststäbe für die feste Verbindung mit benachbarten Bauteilen ausgenutzt werden können.

Damit die Gerüststäbe ohne besonderen Aufwand miteinander verbunden werden können, sind Knotenverbinder vorgesehen, die in Steckverbindung mit den zugehörigen Enden der Gerüststäbe treten. Derartige Knotenverbinder können an Ecken, Abzweigungen oder Kreuzungen vorgesehen sein. Die Knotenverbinder können dann mit einer entsprechenden Zahl von Armen ausgestattet sein, die starr miteinander verbunden sein können. Zur Vermeidung von stark beanspruchten Zonen in den Verbindern und zur Anpassung an die Dehnbarkeit der Faserverbund-Decklagen sowie zum Ausgleich von Fertigungstoleranzen kann es jedoch zweckmäßig sein, Arme der Knotenverbinder verformbar, z.B. gelenkig an jeweils einem zugeordneten gemeinsamen Knotenträger anzusetzen. Dabei kann die gelenkige Anbindung zum Beispiel mittels Achsbolzen oder auch mittels elastischer Bänder erfolgen, die einstückig mit dem Knotenverbinder und dem Knotenträger ausgebildet sind und insbesondere aus elastischem Material, vorzugsweise Kunststoff, bestehen. Es ergibt sich somit eine hohe Variabilität einer solchen Sandwich-Struktur durch einfache Längenänderung der Gerüststäbe sowie eine einfache Produktionsmöglichkeit.

Die Gerüststäbe und Knotenverbinder sowie auch das Kernmaterial sind im Endzustand der Wandsegmente fest mit den Decklagen verklebt. Wenigstens eine der Decklagen kann dabei aus mehreren fest miteinander verbundenen Schichten bestehen, wobei es zweckmäßig ist, eine innen liegende, zum Kernmaterial gerichtete Tragschicht vorzusehen, auf die wenigstens eine Brandschutzschicht und/oder eine Dekorschicht fest aufgebracht ist. Dabei ist es vorteilhaft, wenn die Decklage insbesondere in der innen liegenden Tragschicht vorzugsweise im Bereich von Ecken und an Tür- und/oder Fensterausschnitten Fasereinlagen aus hochfesten Kohlenstofffasern aufweist, während die übrigen Bereiche ein Faser-, insbesondere ein Glasfaserverbund sein können. Die riß- und bruchgefährdeten Ecken dieser Ausschnitte sind dann in besonderer Weise gegen Rißbildung und dergleichen gesichert. Zudem bieten sich einfache Integrationsmöglichkeiten hinsichtlich des Innenausbaus, wobei separate Wärmeisolation und Schalldämmung sowie glatte Innen- und Außenwände durch diese Konstruktion realisiert sind.

Die Erfindung ist nachfolgend anhand der Prinzipskizzen eines Ausführungsbeispiels näher erläutert.

Es zeigen:
- Figur 1: eine Fahrzeugzelle aus mehreren in Fahrzeuglängsrichtung aneinandergesetzten Wandsegmenten,
- Figur 2: ein Seitenwandsegment in Explosionsdarstellung,
- Figur 3a, b: zwei Varianten für ein starres Knotenelement,
- Figur 4: ein Knotenelement mit über Lagerbolzen angelenkten Steckarmen und
- Figur 5: ein Knotenelement mit elastisch angebundenen Steckarmen.

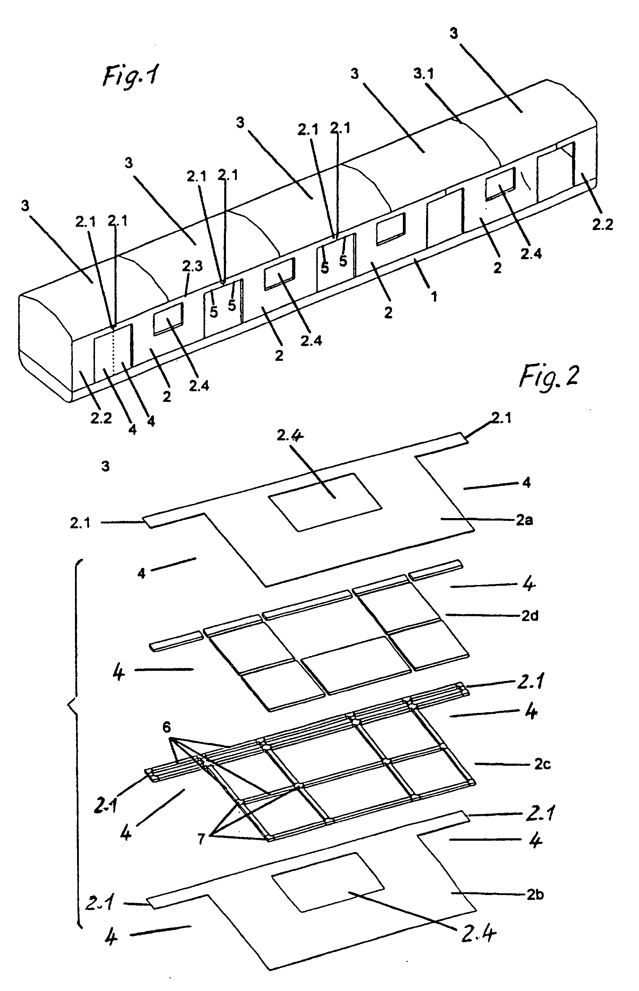

Gemäß Figur 1 ist eine Fahrzeugzelle als Wagenkasten für ein Schienenfahrzeug, insbesondere eine U-Bahn oder Straßenbahn ausgebildet und setzt sich aus einem vorzugsweise aus einem durchgehenden Bodenteil 1 mit darauf stehenden Seitenwänden aus Seitenwandsegmenten 2 und die Fahrgastzelle oben abschließenden Dachwandsegmenten 3 zusammen. Mehrere in Längsrichtung der Fahrzeugzelle aneinandergefügte Seitenwandsegmente 2 bilden dabei die im wesentlichen senkrecht auf dem Boden 1 stehenden Seitenwände, wobei zusätzlich mehrere die Seitenwände oben verbindende, ebenfalls in Längsrichtung der Fahrzeugzelle aneinandergefügte Dachwandsegmente 3 als Dachwand insgesamt die Fahrzeugzelle am Umfang abschließen. Die Seitenwandsegmente 2 weisen an ihren seitlich aneinander angrenzenden Seitenkanten 2.1 jeweils Türteilausschnitte 4 auf, wie sie in Figur 1 an der linken Tür durch eine gestrichelte senkrechte Linie als Verlängerung der verbleibenden Seitenkanten 2.1 dargestellt sind. Die verbleibenden Abschnitte der Seitenkanten 2.1 liegen oberhalb der Türteilausschnitte 4, wobei die Türteilausschnitte 4 vom Boden 1 ausgehend nicht die volle Höhe der Seitenwandsegmente 2 besitzen. Die von den unteren Enden der verbleibenden Seitenkanten 2.1 ausgehenden, in die Segmentfläche des jeweiligen Seitenwandsegments 2 in waagrechter Richtung hineinlaufenden Kanten 5 der Türteilausschnitte 4 sind an benachbarten Seitenwandsegmenten 2 höhengleich angeordnet und weisen zusammen eine in Fahrzeuglängsrichtung gemessene Länge auf, deren Summe einer vollen Türbreite entspricht. Eine feste Verbindung zwischen benachbarten Seitenwandsegmenten 2 ist somit nur über die kurze Strecke der verbleibenden senkrechten Seitenkanten 2.1 erforderlich. Die Kanten 5 verlaufen parallel zur oberen Längskante 2.3 der Seitenwandsegmente 2.

Die Anordnung der Türteilausschnitte in den senkrechten Seitenkanten der Seitenwandsegmente 2 gestattet gemäß Figur 2 einen in sich sehr stabilen Aufbau aus zwei Decklagen 2a und 2b, zwischen die ein Gittergerüst 2c eingebracht ist, das zwischen seinen einzelnen Gitterstäben 6 einzelne Elemente eines wärme- und/oder geräuschdämmenden und zur Gesamtstabilität der Bauweise notwendiges festes Kernmaterial 2d aufnimmt. Die Decklagen 2a, 2b sind dabei sowohl mit dem Gittergerüst 2c als auch mit dem Kernmaterial 2d fest verbunden, insbesondere verklebt. Dabei ist in diese Sandwich-Struktur zwischen zwei Türteilausschnitten 4 zumindest ein voller Fensterausschnitt 2.4 eingefügt, der ohne ein Aufbrechen der Gitterstruktur zwischen den Querstäben 6 vorgesehen ist.

Am jeweiligen Ende einer Fahrzeugzelle vorgesehene endständige Seitenwandsegmente 2.2 weisen nur eine Teillänge der mittleren Seitenwandsegmente 2 auf und sind zudem mit nur einem Türteilausschnitt versehen, der an der senkrechten Seitenkante 2a vorgesehen ist, welche einem angrenzenden Seitenwandsegment 2 zugewandt ist. Es ergibt sich dadurch ein glatter, geradliniger, endseitiger Abschluß der Fahrzeugzelle. Dieses endständige Seitenwandsegment 2.2 wird dabei vorzugsweise mit einer Länge gefertigt, die der halben Länge eines mit zwei Türteilausschnitten versehenen Seitenwandsegments 2 entspricht. Dadurch ergibt sich die Möglichkeit, die Dachwand aus mehreren in Längsrichtung der Fahrzeugzelle aneinander gefügten Dachwandsegmenten 3 zu bilden, deren Länge einem Seitenwandsegment entsprechen kann oder so groß wie die von zwei mit zwei Türteilöffnungen 4 versehenen Seitenwandsegmenten 2 ist. Dadurch können alle Dachwandsegmente 3 mit gleicher Länge ausgebildet werden. Jedes lange Dachwandsegment überdeckt demnach in seinem mittleren Abschnitt jeweils ein volles Seitenwandsegment 2 und beidendig je ein halbes Seitenwandsegment 2. Es ergibt sich dadurch eine stabile und zuverlässige Verbindung der Seitenwandsegmente 2 über das jeweilige Dachsegment 3, wobei das im Bereich einer Stoßstelle zwischen zwei Dachsegmenten 3 angeordnete Seitenwandsegment 2 die feste und in sich steife Verbindung zum nächsten mit Seitenwandsegmenten 2 verbundenen Dachsegment 3 bildet. Die Stoßstelle zwischen zwei Dachwandsegmenten 3 liegt somit im Bereich der Längsmitte oberhalb eines mit zwei Türteilausschnitten versehenen Seitenwandsegments 2.

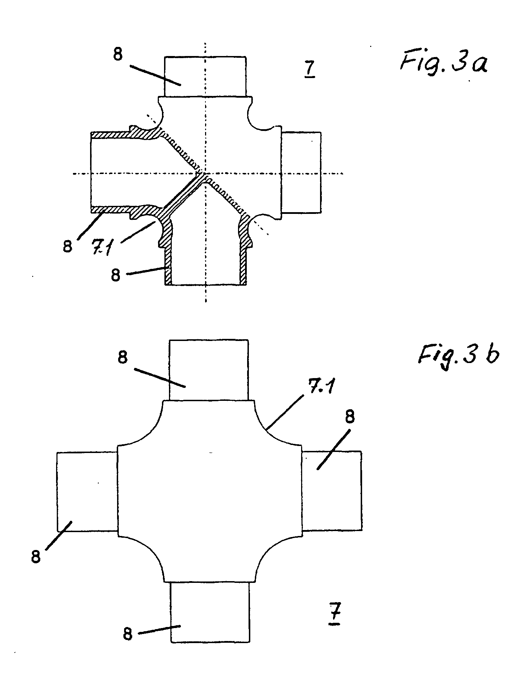

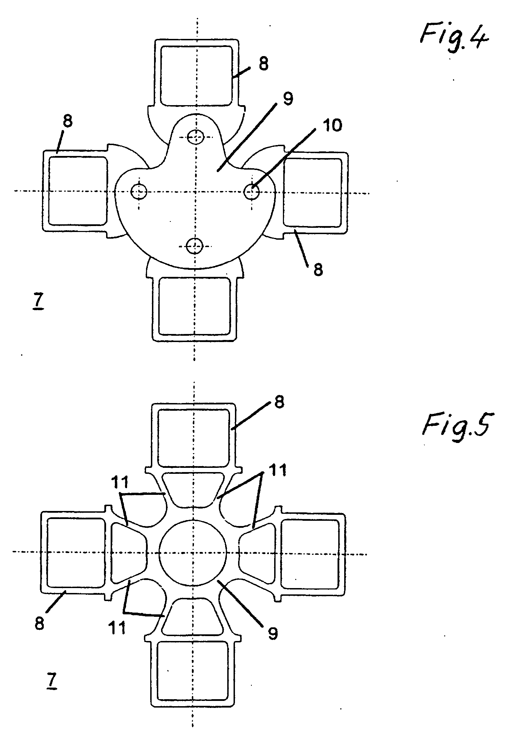

Um im übrigen die Wandsegmente, insbesondere die Seitenwandsegmente 2 auf einfache Weise herstellen zu können, sind die einzelnen Gerüststäbe 6 an ihren Verbindungsstellen jeweils über Knotenverbinder 7 miteinander durch Stecken und gegebenenfalls durch zusätzliches Verkleben oder Vernieten verbunden. Die Knotenverbinder 7 weisen dabei wenigstens zwei unter einem Winkel zueinander stehende Arme 8 auf, wobei sich die Anzahl der Arme und ihre Ausrichtung zueinander an der Zahl und Ausrichtung von Gerüststäben orientiert, die an der betreffenden Verbindungsstelle aufeinander stoßen. Die Gerüststäbe 6 sind dabei insbesondere Hohlstäbe aus Metall oder Faserkunststoff, an deren Innenquerschnitt die Arme 8 der Knotenverbinder 7 angepaßt sind, wodurch Steckverbindungen geschaffen werden. Die Arme 8 können gemäß Figur 3a und 3b starr miteinander verbunden sein. Um hier die hohen mechanischen Beanspruchungen in den Ecken 7.1 zu reduzieren, sind in den Ecken Materialverdickungen bzw.
- anhäufungen vorgesehen (Fig. 3a) oder der Übergangsradius zwischen zwei Armen 8 zur Materialanhäufung entsprechend groß ausgebildet (Fig. 3b). Es ist jedoch auch möglich, zumindest einzelne der Arme eines Knotenverbinders 7 gelenkig mit einem Knotenträger 9 zu verbinden, wie es die Figuren 4 und 5 zeigen. Gemäß Figur 4 sind dabei die einzelnen Arme 8 über Lagerbolzen 10 an einem Knotenträger 9 angelenkt, während sie gemäß Figur 5 über elastische Bänder 11 am zentralen Knotenträger 9 angebunden sind. Es ist dann möglich, Toleranzen zwischen zusammengehörigen Gitterstäben 6 auszugleichen oder Gitterstäbe unter spitzen Winkeln miteinander über die Knotenverbinder 7 zu verbinden. Die Knotenverbinder 7 werden dabei insbesondere durch Kleben im Bereich der Steckverbindungsstellen fest mit den Gitterstäben verbunden und fügen sich ebenengleich in die durch die Gitterstäbe vorgegebene Ebene ein. Dadurch können die Decklagen 2a, 2b und die Knotenverbinder 7 ganzflächig miteinander verklebt werden und bilden so eine in sich starre Sandwich-Struktur. Die Decklagen 2a und 2b können dabei insbesondere aus mehreren fest miteinander verbundenen Schichten bestehen, wobei die auf das Gittergerüst 6, 7 aufgebrachte innen liegende Schicht eine mechanisch hochstabile Tragschicht ist, auf welche eine Brandschutzschicht und/oder eine Dekorschicht aufgetragen ist. Dabei ist es zweckmäßig, die Decklagen 2a, 2b insbesondere an Ecken von Türund/oder Fensterausschnitten 4, 2.4 mit Fasereinlagerungen aus hochfesten Kohlenstofffasern zu versehen, während die übrigen Bereiche mit Glas- oder anderen Fasern gebunden sind. Die Einbringung hochfester Fasern im Eckbereich kann sich dabei auf die Tragschicht beschränken und vermindert die Gefahr von Rißbildung in den Eckbereichen.

Zusätzlich können die Tragschichten in den Ecken von Tür- und/oder Fensterausschnitten neben dem Kleben zusätzlich durch Bolzen mit den Gerüststäben und den Knoten verbunden sein, wobei die Bolzen vorzugsweise so angeordnet sind, daß sie zusätzlich die Gerüststäbe in den Knoten sichern.

## Patentansprüche

1. Fahrzeugzelle, insbesondere Wagenkasten für Schienenfahrzeuge, mit Dach- und Seitenwänden, die jeweils aus mehreren, in Fahrzeuglängsrichtung seitlich aneinandergefügten Wandsegmenten (2, 3) bestehen, wobei in den Seitenwänden Türöffnungen vorgesehen sind, seitlich aneinander angrenzende Seitenwandsegmente (2) im Bereich ihrer einander zugewandten senkrechten Seitenkanten (2.1) Türteilausschnitte (4) aufweisen und die in die Segmentfläche hineinlaufenden höhengleichen Kanten (5) zusammengehöriger Türteilausschnitte (4) zusammen eine Länge aufweisen, deren Summe einer vollen Türbreite entspricht, **dadurch gekennzeichnet, daß** die Wandsegmente (2, 3) eine Sandwich-Struktur mit zwei Decklagen (2a, 2b) und einem fest dazwischen angeordneten Gittergerüst (6, 7) aus miteinander verbundenen Gerüststäben und eingelegten isolierenden Kernen (2d) aufweisen, wobei Gerüststäbe (6) bei den Seitenwandsegmenten (2) entlang der Außenkanten angeordnet sind und über die Türteilausschnitte (4) greifen.

2. Fahrzeugzelle nach Anspruch 1, **dadurch gekennzeichnet, daß** die Türteilausschnitte (4) mit Abstand unterhalb der oberen Längskante (2.3) des zugehörigen Seitenwandsegments (2) enden.

3. Fahrzeugzelle nach Anspruch 2, **dadurch gekennzeichnet, daß** in einem Seitenwandsegment (2) zwischen zwei Türteilausschnitten (4) zumindest ein voller Fensterausschnitt (2.4) vorgesehen ist.

4. Fahrzeugzelle nach einem der vorhergehenden Ansprüche, **dadurch gekennzeichnet, daß** endständige Seitenwandsegmente (2.2) nur einen Türteilausschnitt (4) an einer senkrechten Seitenkante (2.1) aufweisen, die einem angrenzenden Seitenwandsegment (2) zugewandt ist.

5. Fahrzeugzelle nach Anspruch 4, **dadurch gekennzeichnet, daß** das endständige Seitenwandsegment (2.2) höchstens die halbe Länge eines mit zwei Türteilausschnitten (4) versehenen Seitenwandsegments (2) aufweist.

6. Fahrzeugzelle nach einem der vorhergehenden Ansprüche, **dadurch gekennzeichnet, daß** die Dachwand aus mehreren in Fahrzeuglängsrichtung aneinandergefügten Dachwandsegmenten (3) besteht, deren Länge doppelt so groß wie die eines mit zwei Türteilöffnungen (4) versehenen Seitenwandsegments (2) ist.

7. Fahrzeugzelle nach Anspruch 6, **dadurch gekennzeichnet, daß** die Stoßstelle (3.1) zwischen zwei Dachwandsegmenten (3.3) im Bereich der Längsmitte oberhalb eines mit zwei Türteilausschnitten (4) versehenen Seitenwandsegments (2) liegt.

8. Fahrzeugzelle nach einem der vorhergehenden Ansprüche, **dadurch gekennzeichnet, daß** zwischen die einzelnen Gerüststäbe (6) an Stoßstellen mit angrenzenden Gerüststäben (6) Knotenverbinder (7) eingefügt sind.

9. Fahrzeugzelle nach Anspruch 8, **dadurch gekennzeichnet, daß** die Knotenverbinder (7) wenigstens zwei winklig zueinander stehende Arme (8) aufweisen, die in Steckeingriff mit den Stirnseiten zugehöriger Gerüststäbe (6) stehen.

10. Fahrzeugzelle nach Anspruch 8 oder 9, **dadurch gekennzeichnet, daß** Arme (8) der Knotenverbinder (7) starr miteinander verbunden sind.

11. Fahrzeugzelle nach einem der Ansprüche 8 bis 10, **dadurch gekennzeichnet, daß** Arme (8) der Knotenverbinder (7) gelenkig an einem gemeinsamen Knotenträger (9) angesetzt sind.

12. Fahrzeugzelle nach Anspruch 11, **dadurch gekennzeichnet, daß** Arme (8) mittels elastischer Bänder (11) an einem gemeinsamen Knotenträger (9) angebunden sind.

13. Fahrzeugzelle nach einem der vorhergehenden Ansprüche, **dadurch gekennzeichnet, daß** die Decklage (2a, 2b) aus mehreren fest miteinander verbundenen Schichten besteht.

14. Fahrzeugzelle nach einem der vorhergehenden Ansprüche, **dadurch gekennzeichnet, daß** die Decklage (2a, 2b) eine innenliegende Tragschicht aufweist, auf die wenigstens eine Brandschutz- und/oder eine Dekorschicht aufgetragen ist.

15. Fahrzeugzelle nach einem der vorhergehenden Ansprüche, **dadurch gekennzeichnet, daß** die Decklage (2a, 2b) an Ecken von Tür- und/oder Fensterausschnitten (4, 2.4) Fasereinlagerungen aus Kohlenstofffasern und im übrigen Bereich aus Glasfasern aufweist.

16. Fahrzeugzelle nach einem der vorhergehenden Ansprüche, **dadurch gekennzeichnet, daß** die Decklagen (2a, 2b) an Ecken von Tür- und/oder Fensterausschnitten neben dem Kleben zusätzlich durch Bolzen mit den Gerüststäben und den Knoten verbunden sind, wobei die Bolzen vorzugsweise so angeordnet sind, daß sie zusätzlich die Gerüststäbe in den Knoten sichern.

## Claims

1. A vehicle cell, in particular a vehicle body for rail vehicles, with roof walls and side walls that are respectively composed of several wall segments (2, 3) that are laterally connected to one another in the longitudinal direction of the vehicle, wherein door openings are provided in the side walls, wherein laterally adjacent side wall segments (2) contain partial door cutouts (4) in the region of their lateral vertical edges (2.1) that face one another, and wherein the edges (5) of mutually assigned partial door cutouts (4) which lie at the same elevation and extend into the segment surface together have a length, the sum of which corresponds to the full door width, **characterized in that** the wall segments (2, 3) have a sandwich structure consisting with two cover layers (2a, 2b) and a lattice-type frame (6, 7) that is fixedly arranged in between the cover layers and consists of frame poles and inserted insulating cores (2d), wherein frame poles (6) of the side wall segments (2) are arranged along the outer edges and extend above the partial door cutouts (4).

2. The vehicle cell according to Claim 1, **characterized in that** the partial door cutouts (4) end at a certain distance underneath the upper longitudinal edge (2.3) of the corresponding side wall segment (2).

3. The vehicle cell according to Claim 2, **characterized in that** at least one full window cutout (2.4) is provided in a side wall segment (2) between two partial door cutouts (4) .

4. The vehicle cell according to one of the preceding claims, **characterized in that** side wall segments (2.2) on the end of a vehicle only contain a partial door cutout (4) on the vertically extending lateral edge (2.1) that faces an adjacent wall segment (2).

5. The vehicle cell according to Claim 4, **characterized in that** the side wall segment (2.2) on the end of a vehicle has a length that corresponds to no more than half the length of a side wall segment (2) that is provided with two partial door cutouts (4).

6. The vehicle cell according to one of the preceding claims, **characterized in that** the roof wall is composed of several roof wall segments (3) that are connected to one another in the longitudinal direction of the vehicle and the length of which corresponds to twice the length of a side wall segment (2) that is provided with two partial door openings (4).

7. The vehicle cell according to Claim 6, **characterized in that** the joint (3.1) between two roof wall segments (3.3) lies above the region of the longitudinal center of a side wall segment (2) that is provided with two partial door cutouts (4).

8. The vehicle cell according to one of the preceding claims, **characterized in that** joint connectors (7) are arranged at the joints between the individual frame pol es (6) and adjacent frame poles (6).

9. The vehicle cell according to Claim 8, **characterized in that** the joint connectors (7) comprise at least two arms (8) that are arranged at an angle relative to one another and engaged with the end faces of associated frame poles (6) by means of a plug-type connection.

10. The vehicle cell according to Claim 8 or 9, **characterized in that** the arms (8) of the joint connectors (7) are rigidly connected to one another.

11. The vehicle cell according to one of Claims 8-10, **characterized in that** the arms (8) of the joint connectors (7) are attached in an articulated fashion to a common joint carrier (9).

12. The vehicle cell according to Claim 11, **characterized in that** the arms (8) are attached to a common joint carrier (9) by means of elastic bands (11).

13. The vehicle cell according to one of the preceding claims, **characterized in that** the cover layer (2a, 2b) consists of several layers that are rigidly connected to one another.

14. The vehicle cell according to one of the preceding claims, **characterized in that** the cover layer (2a, 2b) comprises an inner support layer, onto which at least one fire protection layer and/or decorative layer is applied.

15. The vehicle cell according to one of the preceding claims, **characterized in that** the cover layer (2a, 2b) contains embedded carbon fibers on the corners of door and/or window cutouts (4, 2.4) and embedded glass fibers in the remaining regions.

16. The vehicle cell according to one of the preceding claims, **characterized in that** the cover layers (2a, 2b) are not only bonded to the frame poles and the joints in the corners of door and/or window cutouts, but also connected thereto by means of bolts, wherein the bolts are preferably arranged such that they additionally secure the frame poles in the joints.

## Revendications

1. Cellule de véhicule, en particulier caisse de voiture pour des véhicules sur rail, avec des parois de toit et des parois latérales, qui se composent chacune de plusieurs segments de paroi (2, 3) assemblés sur les côtés dans le sens longitudinal du véhicule, des ouvertures de porte étant prévues dans les parois latérales, des segments de paroi latérale (2) contigus les uns aux autres sur les côtés présentant des découpes partielles de porte (4) dans la zone de leurs arêtes latérales (2.1) verticales et tournées les unes vers les autres et les arêtes (5) égales en hauteur, s'engageant dans la surface de segment, de découpes partielles de porte (4) cohérentes présentant ensemble une longueur dont le total correspond à une largeur de porte complète, **caractérisée en ce que** les segments de parois (2, 3) présentent une structure de sandwich avec deux couches de couverture (2a, 2b) et une structure de grille (6, 7) intercalée de façon fixe et constituée de barres d'ossature reliées entre elles et de noyaux (2d) isolants et insérés, des barres d'ossature (6) étant disposées le long des arêtes extérieures sur les segments de paroi latérale (2) et dépassant sur les découpes partielles de porte (4).

2. Cellule de véhicule selon la revendication 1, **caractérisée en ce que** les découpes partielles de porte (4) se terminent à distance au-dessous de l'arête longitudinale (2.3) supérieure du segment de paroi latérale (2) correspondant.

3. Cellule de véhicule selon la revendication 2, **caractérisée en ce qu'**au moins une découpe de fenêtre (2.4) complète est prévue dans un segment de paroi latérale (2) entre deux découpes partielles de porte (4).

4. Cellule de véhicule selon l'une quelconque des revendications précédentes, **caractérisée en ce que** des segments de paroi latérale (2.2) en bout de chaîne présentent seulement une découpe partielle de porte (4) sur une arête latérale (2.1) verticale, qui est tournée vers un segment de paroi latérale (2) contigu.

5. Cellule de véhicule selon la revendication 4, **caractérisée en ce que** le segment de paroi latérale (2.2) en bout de chaîne présente tout au plus la demi-longueur d'un segment de paroi latérale (2) pourvu de deux découpes partielles de porte (4).

6. Cellule de véhicule selon l'une quelconque des revendications précédentes, **caractérisée en ce que** la paroi de toit se compose de plusieurs segments de paroi de toit (3) assemblés dans le sens longitudinal du véhicule, dont la longueur est deux fois la longueur d'un segment de paroi latérale (2) pourvu de deux ouvertures partielles de porte (4).

7. Cellule de véhicule selon la revendication 6, **caractérisée en ce que** le point de jonction (3.1) entre deux segments de paroi latérale (3.3) se situe dans la zone du centre longitudinal au-dessus d'un segment de paroi latérale (2) pourvu de deux découpes partielles de porte (4).

8. Cellule de véhicule selon l'une quelconque des revendications précédentes, **caractérisée en ce que** des raccords à gousset (7) sont insérés entre les barres d'ossature (6) individuelles aux points de jonction avec des barres d'ossature (6) contiguës.

9. Cellule de véhicule selon la revendication 8, **caractérisée en ce que** les raccords à gousset (7) présentent au moins deux bras (8) disposés l'un par rapport à l'autre en formant un angle, qui sont en prise d'emboîtement avec les côtés avant de barres d'ossature (6) associées.

10. Cellule de véhicule selon la revendication 8 ou 9, **caractérisée en ce que** des bras (8) des raccords à gousset (7) sont reliés entre eux de façon rigide.

11. Cellule de véhicule selon l'une quelconque des revendications 8 à 10, **caractérisée en ce que** des bras (8) des raccords à gousset (7) sont placés de façon articulée sur un porte-gousset (9) commun.

12. Cellule de véhicule selon la revendication 11, **caractérisée en ce que** des bras (8) sont reliés à un porte-gousset (9) commun au moyen de bandes (11) élastiques.

13. Cellule de véhicule selon l'une quelconque des revendications précédentes, **caractérisée en ce que** la couche de revêtement (2a, 2b) est composée de plusieurs couches reliées entre elles de façon fixe.

14. Cellule de véhicule selon l'une quelconque des revendications précédentes, **caractérisée en ce que** la couche de revêtement (2a, 2b) présente une couche support intérieure, sur laquelle est appliquée au moins une couche de protection contre l'incendie et/ou une couche décorative.

15. Cellule de véhicule selon l'une quelconque des revendications précédentes, **caractérisée en ce que** la couche de revêtement (2a, 2b) présente sur des angles de découpes de porte et/ou de fenêtre (4, 2.4) des inclusions de fibre à base de fibres de carbone et dans la zone restante à base de fibres de verre.

16. Cellule de véhicule selon l'une quelconque des revendications précédentes, **caractérisée en ce que** les couches de recouvrement (2a, 2b) sont reliées aux barres d'ossature et aux goussets, en plus du collage, en supplément par des boulons à des angles de découpes de porte et/ou de fenêtre, les boulons étant disposés de préférence de telle façon qu'ils bloquent en supplément les barres d'ossature dans les goussets.
